# EUROPÄISCHE PATENTSCHRIFT

(11) **EP 2 822 919 B1**
(45) Veröffentlichungstag und Bekanntmachung des Hinweises auf die Patenterteilung: **28.11.2018**
(21) Anmeldenummer: 13708162.6
(22) Anmeldetag: 08.03.2013
(51) Int. Cl.: B28B 11/00, C04B 35/597, C04B 35/622, C04B 35/10, C04B 35/48, C04B 35/565, C04B 35/584

(54) **VERFAHREN ZUR HERSTELLUNG KERAMISCHER KUGELN**
PROCESS FOR THE PREPARATION OF CERAMIC BALLS
PROCÉDÉ POUR LA PRÉPARATION DE BILLES EN CÉRAMIQUE

(30) Priorität: 09.03.2012 DE 102012203759; 13.03.2012 DE 102012203890
(43) Veröffentlichungstag der Anmeldung: 14.01.2015
(73) Patentinhaber: CeramTec GmbH, 73207 Plochingen (DE)
(72) Erfinder: SCHUNCK, Björn, 73207 Plochingen (DE)
(74) Vertreter: Fehrenbacher, Eckhard Anton
(86) Internationale Anmeldenummer: PCT/EP2013/054695
(87) Internationale Veröffentlichungsnummer: WO 2013/132051

(56) Entgegenhaltungen:
- CN-A- 101 062 865
- MA L G ET AL: "Control of the inner stresses in ceramic green bodies formed by gelcasting", CERAMICS INTERNATIONAL, ELSEVIER, AMSTERDAM, NL, Bd. 32, Nr. 2, 1. Januar 2006 (2006-01-01) , Seiten 93-98, XP024914290, ISSN: 0272-8842, DOI: 10.1016/J.CERAMINT.2004.12.011 [gefunden am 2006-01-01]

## Beschreibung

Die Erfindung betrifft ein Verfahren zur Herstellung keramischer Kugeln.

Nach dem Stand der Technik erfolgt die Herstellung, auch Formgebung genannt, keramischer Kugeln mit einem Durchmesser zwischen 1 und 10 mm durch die Technik des axialen oder des isostatischen Trockenpressens.

Aufgrund der unterschiedlichen Verdichtungswege zwischen Rand und Kugelmitte, kommt es beim axialen Trockenpressen zu starken Dichteinhomogenitäten innerhalb der Kugeln. Poren bzw. Rissbildungen sind die Folge.

Das isostatische Trockenpressen führt zwar zu einer homogenen Dichteverteilung, jedoch ergeben sich Prozesszeiten, die einer wirtschaftlichen Fertigung kleinerer Kugeln mit einem Durchmesser von 1 bis 10 mm entgegenstehen.

CN 101062865 A beschreibt ein Verfahren zur Herstellung keramischer Kugeln, wobei durch Kalt- oder Warmextrusion eines keramischen Feedstocks (Mischung aus anorganischem Keramikpulver bestehend aus Li2CO3 und SiO2 und organischen Komponenten) Kugeln geformt werden und diese Kugeln gesintert werden.

Der Erfindung liegt die Aufgabe zugrunde, ein Verfahren zur Herstellung keramischer Kugeln so zu verbessern, dass die fertigen Kugeln keine Poren und Rissbildungen im inneren aufweisen und das Verfahren kleine Prozesszeiten ermöglicht.

Erfindungsgemäß wird diese Aufgabe durch die Merkmale des Anspruchs 1 gelöst. Dadurch, dass durch Kalt- oder Warmextrusion eines keramischen Feedstocks (Mischung aus anorganischem Keramikpulver bestehend aus den Werkstoffen Al2O3, SiC, Si3N4, ZrO2 oder SiAlONe oder deren Mischungen und organischen Komponenten) ein Rundstab mit einer homogenen Materialverteilung erzeugt wird und aus dem Rundstab unter Beibehaltung der homogenen Materialverteilung bei einer Materialtemperatur von 10-200°C Kugeln geformt werden und anschließend gesintert werden, weisen die fertigen Kugeln keine Poren und Rissbildungen im inneren auf. Dieses Verfahren ermöglicht kleine Prozesszeiten.

Im Temperaturbereich von 10-200°C besitzt der Feedstock bzw. der Rundstab ein plastisches Verformungsverhalten, welches die Kugelformgebung in Kombination mit einer der beiden folgenden Verfahren erlaubt.

### Verfahren 1:

Nach der Kalt- oder Warmextrusion wird der Rundstab in zylindrische Abschnitte mit einer definierten Länge zertrennt. In einem bevorzugt direkt anschließenden Umformprozess (bevorzugt Stauchen zwischen zwei Kalotten) werden die zylindrischen Abschnitte bei einer Materialtemperatur von 10-200°C zu Kugeln geformt, wobei die homogene Materialverteilung erhalten bleibt. Nach einer Abkühlphase von < 10 sec kann die Kugel entformt werden.

### Verfahren 2:

Nach der Kalt- oder Warmextrusion wird der Rundstab durch kontinuierliches Umformen mittels der Technik des Schrägwalzens zu Kugeln geformt. Diese Umformung erfolgt ebenfalls bei einer Materialtemperatur von 10 - 200°C. Auch hierbei bleibt die homogene Materialverteilung des extrudierten Rundstabs erhalten. Der keramische Feedstock besteht aus einem anorganischen Keramikpulver und einer organischen Komponente.

Das anorganische Keramikpulver besteht aus den Werkstoffen Al₂O3, SiC, Si₃N₄, ZrO₂ oder SiAlONe oder einer Mischung dieser.

Die organische Komponente besteht bevorzugt aus einem Kunststoff, insbesondere einem langkettigen Kunststoff sowie weiteren Komponenten wie Wachsen, Cellulose, Wasser und Öle.

Bevorzugt werden Kugeln mit einem Durchmesser kleiner 10 mm hergestellt.

Bevorzugt werden mit diesem Verfahren keramische Wälzlagerkugeln hergestellt. Das erfindungsgemäße Verfahren ist effizient und kann zur Herstellung keramischer Wälzlagerkugeln in Großserie verwendet werden.
Das erfindungsgemäße Verfahren eignet sich zur Formgebung keramischer Kugeln über die Prozessschritte Extrusion mit anschließender Umformung (z.B. Stauchen oder Schrägwalzen), insbesondere
- für die Werkstoffe Al₂O₃, SiC, Si₃N₄, ZrO₂, und SiAlONe
- für Kugeldurchmesser <10mm

In den Figuren werden Verfahrensschritte des Herstellungsprozesses gezeigt.

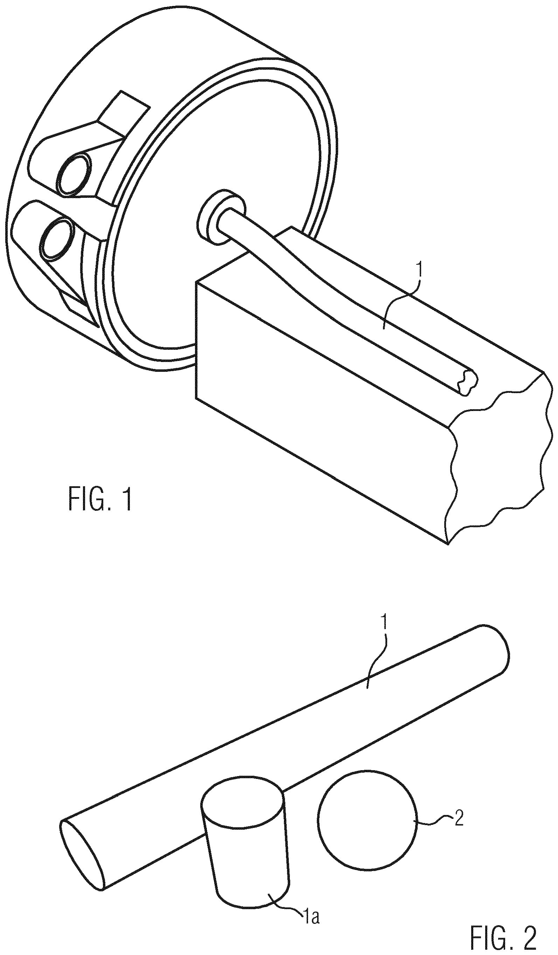

Figur 1 zeigt die Warmextrusion eines keramischen Feedstocks (Mischung aus anorganischem Keramikpulver und organischen Komponenten) zur Herstellung eines Rundstabs 1 mit einer homogenen Materialverteilung.
Figur 2 zeigt einen Rundstab 1 und einen zylindrischen Abschnitt 1a mit einer definierten Länge, die sich nach dem Durchmesser der fertigen Kugel richtet. Mit dem Bezugszeichen 2 ist die fertige Kugel bezeichnet.

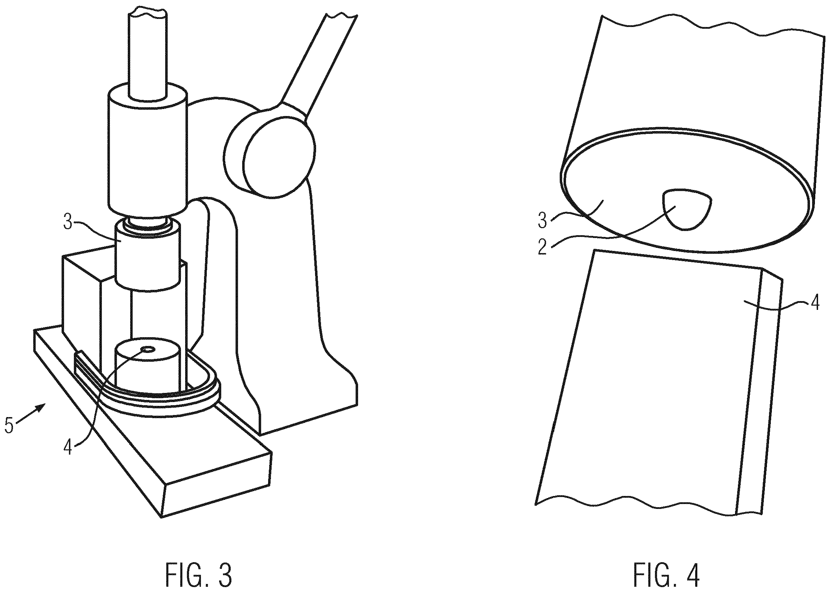

Figur 3 zeigt eine Presse 5 mit der der Umformprozess des zylindrischen Abschnitts 1a bei einer Materialtemperatur von 10-200°C zu Kugeln durch Stauchen zwischen zwei Kalotten 3, 4 erfolgt.
Figur 4 zeigt eine keramische Kugel 2 nach dem Umformprozess noch in einer Kalotte 3 des Presswerkzeugs 5.

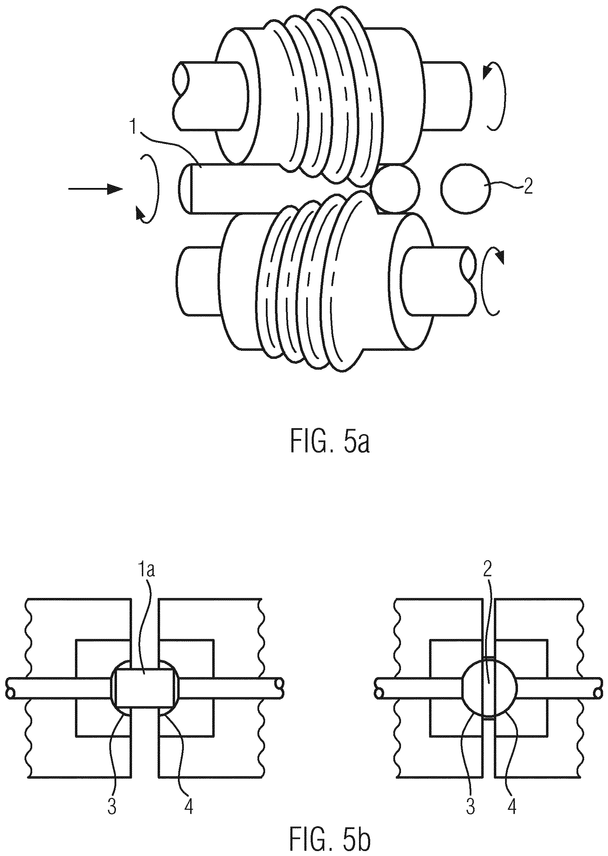

Figur 5a zeigt eine Vorrichtung zum Schrägwalzen und Figur 5b schematisch das Vorgehen beim Stauchen.

Gleiche Bezugszeichen zeigen den gleichen Gegenstand, wie in den anderen Figuren.

## Patentansprüche

1. Verfahren zur Herstellung keramischer Kugeln (2), wobei durch Kalt- oder Warmextrusion eines keramischen Feedstocks (Mischung aus anorganischem Keramikpulver und organischen Komponenten) Kugeln (2) geformt werden und diese Kugeln (2) gesintert werden, **dadurch gekennzeichnet,**
- **dass** aus den keramischen Feedstocks ein Rundstab (1) mit einer homogenen Materialverteilung erzeugt wird,
- aus dem Rundstab (1) unter Beibehaltung der homogenen Materialverteilung bei einer Materialtemperatur von 10-200°C die Kugeln (2) geformt werden und
- das anorganische Keramikpulver aus den Werkstoffen Al₂O₃, SiC, Si₃N₄, ZrO2 oder SiAlONe oder einer Mischung dieser besteht.

2. Verfahren nach Anspruch 1, **dadurch gekennzeichnet, dass** der Rundstab (1) in zylindrische Abschnitte (1a) aufgeteilt wird und nach Aufteilung die Abschnitte (1a) in einem bevorzugt direkt anschließenden Umformprozess zu Kugeln (2) geformt werden.

3. Verfahren nach Anspruch 2, **dadurch gekennzeichnet, dass** der Umformprozess ein Stauchen zwischen zwei Kalotten (3, 4) ist.

4. Verfahren nach 1, **dadurch gekennzeichnet, dass** nach der Kalt- oder Warmextrusion der Rundstab (1) durch kontinuierliches Umformen mittels der Technik des Schrägwalzens zu Kugeln (2) geformt wird.

5. Verfahren nach einem der Ansprüche 1 bis 4, **dadurch gekennzeichnet, dass** die organische Komponente aus einem Kunststoff, insbesondere einem langkettigen Kunststoff sowie weiteren Komponenten wie Wachsen, Cellulose, Wasser und Öle besteht.

6. Verfahren nach einem der Ansprüche 1 bis 5, **dadurch gekennzeichnet, dass** Kugeln (2) mit einem Durchmesser kleiner 10 mm hergestellt werden.

7. Verfahren nach einem der Ansprüche 1 bis 6, **dadurch gekennzeichnet, dass** mit diesem Verfahren keramische Wälzlagerkugeln hergestellt werden.

## Claims

1. A method for producing ceramic balls (2), wherein balls (2) are formed, by means of cold or hot extrusion of a ceramic feedstock, from a mixture of inorganic ceramic powder and organic components, and these balls (2) are sintered, **characterised in that**
- a round rod (1) with a homogeneous material distribution is made from the ceramic feedstock,
- the balls (2) are formed from the round rod (1) whilst maintaining the homogeneous material distribution at a material temperature of 10-200°C, and
- the inorganic ceramic powder consists of the materials Al₂O₃, SiC, Si₃N₄, ZrO₂ or SiAlONe or a mixture of these.

2. A method according to claim 1, **characterised in that** the round rod (1) is divided into cylindrical sections (1a), and after division the sections (1a) are formed into balls (2) in a re-forming process which preferably follows immediately thereafter.

3. A method according to claim 2, **characterised in that** the re-forming process is a compression between two spherical indentations (3, 4).

4. A method according to claim 1, **characterised in that** after the cold or hot extrusion the round rod (1) is formed into balls (2) by continuous re-forming by means of the skew-rolling technique.

5. A method according to one of claims 1 to 4, **characterised in that** the organic component consists of a plastics material, in particular a long-chain plastics material, and also further components, such as waxes, cellulose, water and oils.

6. A method according to one of claims 1 to 5, **characterised in that** balls (2) are produced with a diameter of less than 10 mm.

7. A method according to one of claims 1 to 6, **characterised in that** ceramic rolling-bearing balls are produced with this method.

## Revendications

1. Procédé de fabrication de billes en céramique (2), selon lequel des billes (2) sont formées par extrusion à froid ou à chaud d'une charge d'alimentation céramique constituée d'un mélange de poudre céramique inorganique et de composants organiques, et ces billes (2) sont frittées, **caractérisé en ce que**
- une tige ronde (1) avec une répartition homogène de la matière est produite à partir des charges d'alimentation céramiques,
- les billes (2) sont formées à partir de la tige ronde (1), en conservant la répartition homogène de la matière, à une température de matière allant de 10 à 200 °C, et
- la poudre céramique inorganique est constituée des matériaux Al₂O₃, SiC, Si₃N₄, ZrO₂ ou SiAlONe ou d'un mélange de ceux-ci.

2. Procédé selon la revendication 1, **caractérisé en ce que** la tige ronde (1) est divisée en tronçons cylindriques (1a) et, après division, les tronçons (1a) sont mis en forme pour obtenir des billes (2), au cours d'un processus de mise en forme réalisé de préférence directement à la suite.

3. Procédé selon la revendication 2, **caractérisé en ce que** le processus de mise en forme consiste en un refoulement entre deux calottes (3, 4).

4. Procédé selon la revendication 1, **caractérisé en ce que**, après l'extrusion à froid ou à chaud, la tige ronde (1) est façonnée par mise en forme continue, par la technique du laminage à cylindre oblique, en vue d'obtenir des billes (2).

5. Procédé selon une des revendications 1 à 4, **caractérisé en ce que** le composant organique est constitué d'une matière plastique, en particulier d'une matière plastique à chaîne longue, ainsi que d'autres composants tels que des cires, la cellulose, l'eau et des huiles.

6. Procédé selon une des revendications 1 à 5, **caractérisé en ce que** l'on fabrique des billes (2) d'un diamètre inférieur à 10 mm.

7. Procédé selon une des revendications 1 à 6, **caractérisé en ce que** l'on fabrique avec ce procédé des billes en céramique pour des paliers à roulement.
